# EUROPEAN PATENT SPECIFICATION

(11) **EP 3 185 473 B1**
(45) Date of publication and mention of the grant of the patent: **10.06.2020**
(21) Application number: 14881665.5
(22) Date of filing: 21.10.2014
(51) Int. Cl.: H04L 12/24

(54) **BACKUP PROTECTION METHOD AND DEVICE FOR CARRIER GRADE NAT (CGN)**
BACKUP-SCHUTZVERFAHREN UND -VORRICHTUNG FÜR NAT AUF TRÄGEREBENE (CGN)
PROCÉDÉ DE PROTECTION DE SAUVEGARDE ET DISPOSITIF DE NAT DE CLASSE TRANSPORTEUR (CGN)

(30) Priority: 21.08.2014 CN 201410413184
(43) Date of publication of application: 28.06.2017
(73) Proprietor: ZTE Corporation, Shenzhen, Guangdong 518057 (CN)
(72) Inventor: WANG, Feng, Shenzhen Guangdong 518057 (CN); CHEN, Guixiang, Shenzhen Guangdong 518057 (CN); DU, Chengxiang, Shenzhen Guangdong 518057 (CN)
(74) Representative: Novagraaf Technologies
(86) International application number: PCT/CN2014/089089
(87) International publication number: WO 2015/117389

(56) References cited:
- EP-A1- 2 843 910
- EP-A1- 2 869 494
- WO-A1-2013/073000
- CN-A- 102 325 056
- CN-A- 102 447 583
- CN-A- 102 447 703
- CN-A- 102 708 027

## Description

### Technical Field

The present disclosure relates to the field of communications, and in particular to a backup protection method and device for Carrier Grade network address Translation (CGN).

### Background

Carrier Grade NAT (CGN) is a technology of deploying devices in a carrier. In order to address the problem of exhaustion of existing public network addresses, a carrier grade device is designed with high reliability and a perfect backup protection mechanism. Currently and commonly used backup protection schemes can be classified into cold backup and hot backup. Cold backup refers to a backup method in which service information is regenerated when the service information is switched to a backup device. Hot backup refers to a backup method in which the service information is backed up in real time. At present, cold backup realizes backup by adopting two main control units or two service units to implement redundant device backup. Hot backup realizes backup by adopting two devices or service units and uses an extended Virtual Router Redundancy Protocol (VRRP) or a private service information backup protocol for the backup of a service. However, the relatively simplex use of either hot backup or cold backup in related art is inapplicable to more application scenarios.

No effective solutions have been proposed to address the problem that the relatively simplex use of either hot backup or cold backup in related art is inapplicable to more application scenarios.

WO2013/159641, WO2014/019451, CN102447703 and CN102447583 provide the related technical solutions; however, the above mentioned problem still remains unsolved.

### Summary

Embodiments of the present disclosure provide a backup protection method and device for CGN to address the problem existing in related art that the relatively simplex use of either hot backup or cold backup is inapplicable to more application scenarios. The present invention is defined in the appended independent claims to which reference should be made. Advantageous features are set out in the appended dependent claims.

### Brief Description of the Drawings

The accompanying drawings described herein which are incorporated in and form a part of the specification are provided for the better understanding of the present disclosure, and exemplary embodiments of the present disclosure, together with the description thereof, serve to explain the present disclosure but are not to be construed as improper limitations to the present disclosure. In the accompanying drawings:
Fig. 1 is a flowchart illustrating a backup protection method for CGN according to an embodiment of the present disclosure;
Fig. 2 is a schematic diagram illustrating the structure of a backup protection device for CGN according to an embodiment of the present disclosure;
Fig. 3 is a flowchart illustrating a backup protection method for CGN according to an exemplary embodiment of the present disclosure; and
Figs. 4a-4c are schematic diagrams illustrating deployment scenarios of one or more CGN devices according to exemplary embodiments of the present disclosure.

### Detailed Description of the Embodiments

The present disclosure will be described below in detail with reference to accompanying drawings when read in conjunction with specific embodiments. It should be noted that the embodiments of the present disclosure and the features thereof can be combined with each other if no conflict is caused.

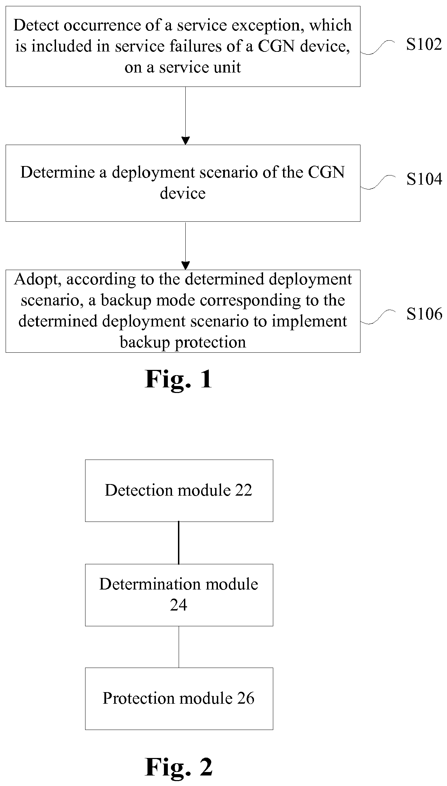

A backup protection method for CGN is provided in an embodiment. Fig. 1 is a flowchart illustrating a backup protection method for CGN according to an embodiment of the present disclosure. As shown in Fig. 1, the flow includes the following steps:
S102: detecting occurrence of a service exception, which is included in service failures of a CGN device, on a service unit;
S104: determining a deployment scenario of the CGN device; and
S106: adopting, according to the determined deployment scenario, a backup mode corresponding to the determined deployment scenario to implement backup protection.

By detecting occurrence of a service exception, which is included in service failures of a CGN device, on a service unit, determining a deployment scenario of the CGN device and adopting, according to the determined deployment scenario, a backup mode corresponding to the determined deployment scenario to implement backup protection, the method provided in the embodiment addresses the problem that the relatively simplex use of either hot backup or cold backup in related art is inapplicable to more application scenarios and consequentially improves the reliability and the stability of a network.

In an exemplary embodiment, in addition to a BRAS user accessing management device, the deployment scenario may further include at least one of: one CGN device deployed, two CGN devices deployed one of which being deployed in a side hanging manner, and two CGN devices deployed both of which being deployed in a side hanging manner. The CGN device mentioned herein may be of an integrated type, that is, the CGN device may have the functions of BRAS.

In an exemplary embodiment, adopting the backup mode corresponding to the determined deployment scenario to implement backup protection may include: carrying out at least one of the following switching operations if a service exception of the CGN device is detected: protection switching of a private network user to a public network user, private network user remote backup protection, private network user tunnel backup protection, private network user label backup protection, and private network user type switching backup protection; and carrying out at least one of the following switching-back operations if service restoration of the CGN device is detected: switching of a public network user back to a private network user, private network user remote switching-back protection, private network user tunnel switching-back protection, private network user label switching-back protection, and private network user type switching-back protection.

In an exemplary embodiment, adopting, according to the determined deployment scenario, the backup mode corresponding to the determined deployment scenario to implement backup protection may include: in a case where the deployment scenario is one CGN device deployed, acquiring a public network address by refreshing an address of a terminal user and performing protection switching of a private network user to a public network user under a condition that a service exception occurs in the CGN device; and switching the public network user back to a private network user under a condition that a service of the CGN device is restored.

In an exemplary embodiment, adopting, according to the determined deployment scenario, the backup mode corresponding to the determined deployment scenario to implement backup protection may include: in a case where the deployment scenario is two CGN devices deployed one of which being deployed in a side hanging manner, private network user tunnel backup switching and switching-back may include: under a condition that a service exception occurs in the CGN device, marking a tunnel flag as activated and encapsulating a tunnel to enable a private network user to process a service at a remote centralized CGN device; and under a condition that a service of the CGN device is restored, marking the tunnel flag as deactivated and accessing a public network address after routing and forwarding at an intermediate device; in a case where the deployment scenario is two CGN devices deployed one of which being deployed in a side hanging manner, private network user label backup switching and switching-back may include: under a condition that a service exception occurs in the CGN device, marking a label flag as activated and encapsulating a label to enable a private network user to process a service at a remote centralized CGN device; and under a condition that a service of the CGN device is restored, marking the label flag as deactivated and accessing a public network address after routing and forwarding at an intermediate device; and in a case where the deployment scenario is two CGN devices deployed one of which being deployed in a side hanging manner, private network user type backup switching and switching-back may include: under a condition that a service exception occurs in the CGN device, when a service of a service unit is interrupted, causing a user to log out and then conduct VPDN dialing again to obtain a private or public network address, enabling a private network user to process a service at a remote LNS device and directly performing routing and forwarding for a public network user at a remote LNS device; and under a condition that a service of the CGN device is restored, accessing a public network after routing and forwarding at an intermediate device.

A backup protection device for CGN is provided in an embodiment of the present disclosure to realize the foregoing embodiments and exemplary implementations, and what has been described above is not described below repeatedly. The term 'module', as used hereinafter, is the combination of software and/or hardware for realizing preset functions. Although the devices described in the following embodiments are implemented as software preferably, the implementation of the devices as hardware or the combination of software and hardware may also be devised.

Fig. 2 is a schematic diagram illustrating the structure of a backup protection device for CGN according to an embodiment of the present disclosure. The device includes: a detection module 22 arranged to detect occurrence of a service exception, which is included in service failures of a CGN device, on a service unit; a determination module 24 coupled with the detection module 22 and arranged to determine a deployment scenario of the CGN device; and a protection module 26 coupled with the determination module 24 and arranged to adopt, according to the determined deployment scenario, a backup mode corresponding to the determined deployment scenario to implement backup protection.

In an exemplary embodiment, the deployment scenario may include at least one of: one CGN device deployed, two CGN devices deployed one of which being deployed in a side hanging manner, and two CGN devices deployed both of which being deployed in a side hanging manner.

In an exemplary embodiment, adopting the backup mode corresponding to the determined deployment scenario to implement backup protection may include: carrying out at least one of the following switching operations if a service exception of the CGN device is detected: protection switching of a private network user to a public network user, private network user remote backup protection, private network user tunnel backup protection, private network user label backup protection, and private network user type switching backup protection; and carrying out at least one of the following switching-back operations if service restoration of the CGN device is detected: switching of a public network user back to a private network user, private network user remote switching-back protection, private network user tunnel switching-back protection, private network user label switching-back protection, and private network user type switching-back protection.

In an exemplary embodiment, in a case where the deployment scenario is one CGN device deployed, the protection module is also arranged to acquire a public network address by refreshing an address of a terminal user and perform protection switching of a private network user to a public network user under a condition that a service exception occurs in the CGN device; and switch the public network user back to the private network user under a condition that a service of the CGN device is restored.

In an exemplary embodiment, the protection module is also arranged to: in a case where the deployment scenario is two CGN devices deployed one of which being deployed in a side hanging manner, carry out a private network user tunnel backup switching and switching-back processing which may include: under a condition that a service exception occurs in the CGN device, marking a tunnel flag as activated and encapsulating a tunnel to enable a private network user to process a service at a remote centralized CGN device; and under a condition that a service of the CGN device is restored, marking the tunnel flag as deactivated and accessing a public network address after routing and forwarding at an intermediate device; in a case where the deployment scenario is two CGN devices deployed one of which being deployed in a side hanging manner, carry out a private network user label backup switching and switching-back processing which may include: under a condition that a service exception occurs in the CGN device, marking a label flag as activated and encapsulating a label to enable a private network user to process a service at a remote centralized CGN device; and under a condition that a service of the CGN device is restored, marking the label flag as deactivated and accessing a public network address after routing and forwarding at an intermediate device; and in a case where the deployment scenario is two CGN devices deployed one of which being deployed in a side hanging manner, carry out a private network user type backup switching and switching-back processing which may include: under a condition that a service exception occurs in the CGN device, when a service of a service unit is interrupted, causing a user to log out and then conduct VPDN dialing again to obtain a private or public network address, enabling a private network user to process a service at a remote LNS device and directly performing routing and forwarding for a public network user at a remote LNS device; and under a condition that a service of the CGN device is restored, accessing a public network after routing and forwarding at an intermediate device.

To provide a better understanding of the above embodiments of the present disclosure, the present disclosure is explained below with reference to exemplary embodiments.

Exemplary embodiments of the present disclosure are intended to provide a backup protection method and device for CGN to address the problem existing in the backup protection scenarios of a single or a plurality of CGN devices. The method provided herein which is transparent to a terminal user makes a network highly reliable and stable and improves the flexibility of deployment.

To achieve the foregoing purpose, exemplary embodiments of the present disclosure adopt the following technical solutions.

A reliability switching action conducted when a service exception occurs in a CGN device may include: protection switching of a private network user to a public network user, private network user remote backup protection, private network user tunnel backup protection, private network user label backup protection, and private network user type switching backup protection.

A corresponding switching-back action conducted when the service is restored may include: switching of a public network user back to a private network user, private network user remote switching-back protection, private network user tunnel switching-back protection, private network user label switching-back protection, and private network user type switching-back protection.

The switching of a private network user to a public network user and switching of a public network user back to a private network user may preferably be realized in the following way. A user gets online and the status of a service unit is checked. A user attribute is distributed. When the service unit is available, a private address is preferably acquired. When the service of the service unit is interrupted, the user attribute is refreshed, and the terminal user reacquires a public network address.

The private network user remote backup switching and switching-back may be specifically realized in the following way. A private network user remote backup mode is configured. A user gets online to acquire a private network address. When the service of the service unit is interrupted, no user refreshing processing is conducted, and a private network user processes a service at a remote centralized CGN device.

In an exemplary embodiment, the private network user tunnel backup switching and switching-back may be specifically realized in the following way. A private network user tunnel backup mode is configured. A user gets online to acquire a private network address. When the service of the service unit is normal, a tunnel flag is marked as deactivated, and the user accesses a public network via routing and forwarding of an intermediate device. When the service of the service unit is interrupted, a tunnel flag is marked as activated and the tunnel is encapsulated, so that a private network user processes a service at a remote centralized CGN device.

The tunnel flag can be processed in one of the following ways. The flag can be directly set in a tunnel module after the matching of a user source address; or the tunnel flag is realized by setting priorities of tunnel routings; or the tunnel flag is realized by setting a mutual exclusion marker for CGN and the tunnel.

In an exemplary embodiment, the private network user label backup switching and switching-back may be specifically realized in the following way. A private network user label backup mode is configured. A user gets online to acquire a private network address. When the service of the service unit is normal, a label flag is marked as deactivated, and the user accesses a public network via routing and forwarding of an intermediate device. When the service of the service unit is interrupted, the label flag is marked as activated and the tunnel is encapsulated, so that a private network user processes a service at a remote centralized CGN device. The label flag can be processed in one of the following ways. The flag can be directly set in a label module after the matching of a user source address; or the label flag can be realized by setting priorities of label routings; or the label flag can be realized by setting a mutual exclusion marker for CGN and the label.

In an exemplary embodiment, the private network user type backup switching and switching-back may be specifically realized in the following way. A private network user type backup mode is configured. A user gets online using the PPPoE to acquire a private network address. When the service of the service unit is normal, the user accesses a public network via routing and forwarding of an intermediate device. When the service of the service unit is interrupted, the user gets offline and then performs VPDN dialing again to acquire a private or public network address, a private network user processes a service at a remote LNS device, and a public network user is directly routed and forwarded at a remote LNS device.

In an exemplary embodiment, a backup protection control module may be arranged in the CGN device.

The backup method and device for CGN provided herein can address the problem existing in the backup protection scenarios of a single or a plurality of CGN devices and improve the reliability of a device.

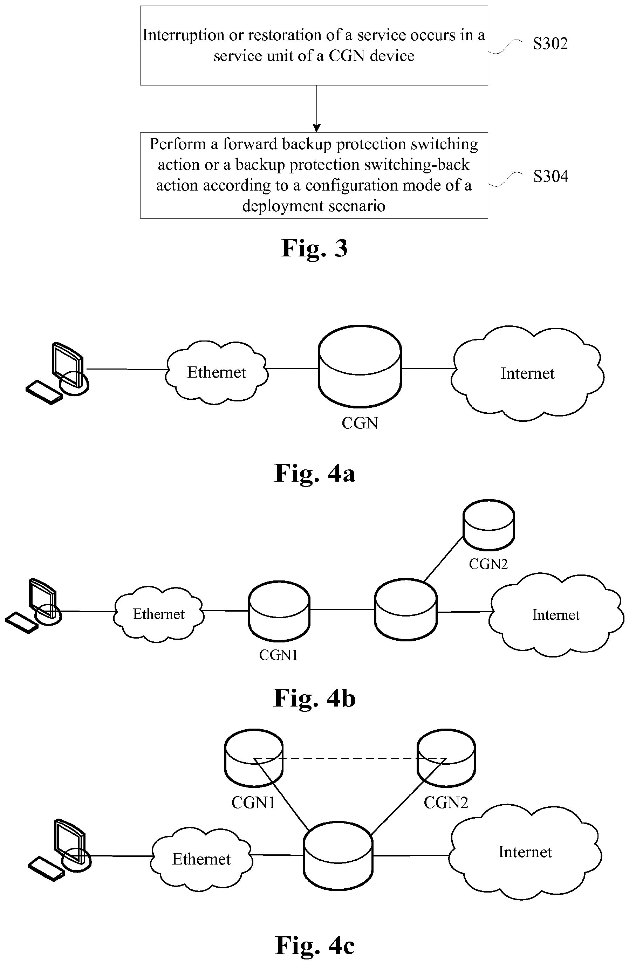

Fig. 3 is a flowchart illustrating a backup protection method for CGN according to an exemplary embodiment of the present disclosure. As shown in Fig. 3, the method includes the following steps.

S302: Interruption or restoration of a service occurs in a service unit of a CGN device.

The interruption of a service may refer to the occurrence of a failure in the service unit, for example, the exhaustion of a public network address pool, the manual restart of the service unit by the manager, the deactivation of a service switch by the manager or the like.

S304: A forward backup protection switching action or a backup protection switching-back action is implemented according to the configuration mode of a deployment scenario.

Figs. 4a-4c are schematic diagrams illustrating deployment scenarios of one or more CGN devices according to exemplary embodiments of the present disclosure. As shown in Fig. 4a, only one CGN device is arranged in a scenario 1, and a plurality of service units may be arranged on the single device. A cold backup mode or a hot backup mode may be set for the service units, or a mode of switching a private network user to a public network user may be set for the service units. As shown in Fig. 4b, two CGN devices are included in a scenario 2. A private network remote mode, a private network tunnel mode, a private network label mode or a private network user type switching mode may be set for a backup between the devices. As shown in Fig. 4c, two CGN devices both of which are deployed on a side hanging way are included in a scenario 3. A cold backup mode or a hot backup mode may be set for a backup between the devices, where the cold backup mode is the combination of the foregoing solutions, and in the hot backup mode, a service backup can be implemented using a private service backup protocol.

In an exemplary embodiment, the steps executed in the scenario 1 include:
first, setting by default that the user is a private network user and the backup mode of a service unit is cold backup;
second, setting backup mode to be hot backup when a hot backup service unit is configured, for example,
Location node 1 SPU-0/1/0 SPU-0/1/1: backup modes of the two service units are set as hot backup;
and last, configuring a private user switching mark as a mode of switching a private network to a public network, for example:
cgn-check enable: check status of service unit
Private-to-public: attribute of user address pool

In an exemplary embodiment, the steps executed in the scenario 2 include:
First, a private network user remote protection mode is configured for a CGN1 and a CGN2 by default. When the service of the CGN1 is interrupted, the service is forwarded to the CGN2 for service processing by recognizing a private network user.
Second, the CGN 1 and the CGN2 configures a GRE tunnel to a private network user tunnel mode. A CGN1 user gets online to acquire a private network address. When the service of a service unit is normal, a tunnel flag is marked as deactivated, and the user accesses a public network via routing and forwarding of an intermediate device. When the service of the service unit is interrupted, the tunnel flag is marked as activated and the tunnel is encapsulated, so that a private network user processes a service at the remote centralized CGN2 device.

The tunnel flag can be processed in one of the following ways: the flag can be directly set in a tunnel module after the matching of a user source address; or the tunnel flag is realized by setting priorities of tunnel routings; or the tunnel flag is realized by setting a mutual exclusion marker for CGN and the tunnel. For example:
cgn-check enable: check status of service unit
route-map cgn: associated route-map, specifying the next hop of the user of a private network source address to be a tunnel
It should be noted that the configuration of a label mode is similar to that of a tunnel mode and is therefore not described here repeatedly.

Last, a private network user type switching mode is configured. A user gets online using the PPPoE to acquire a private network address. When the service of a service unit is normal, the user access a public network after being routed and forwarded through an intermediate device. When a service of a service unit is interrupted, the user gets offline and performs VPDN dialing again to obtain a private or public network address, a private network user processes a service at a remote LNS device, and a public network user is directly routed and forwarded at a remote LNS device. For example:
cgn-check enable: check status of service unit
private-to-public: attribute of user address pool
pppoe-to-vpdn enable: switching pppoe user to vpdn user
In an exemplary embodiment, the key steps executed in the scenario 3 include:
First, setting by default that that a user is a private network user and the mode of the backup between devices is cold backup;
First: setting the backup mode of the device to be hot backup, for example:
   sib-peer-group 1: configure a private service information backup group and achieve real-time information synchronization
   remote-ip 99.85.1.1 port 1025 local-ip 99.85.1.2 port 1.25 port-count 2$ sib-instance 1
   role master: specify master-backup relationship
   bind interface smartgroup1: linked interfaces
   bind bfd remote-ip 99.85.1.1 local-ip 99.85.1.2 time 5: link detection
   bind sib-peer-group 1

According to exemplary embodiments of the present disclosure, backup protection mechanisms are classified as follows according to different granularities and application scenarios: protection switching of a private network user to a public network user; private network user remote backup protection, private network user tunnel backup protection, private network user label backup protection, and private network user type switching backup protection. Corresponding switching-back processing may include: switching of a public network user back to a private network user, private network user remote switching-back protection, private network user tunnel switching-back protection, private network user label switching-back protection, user, private network user remote switching-back protection, private network user tunnel switching-back protection, private network user label switching-back protection, and private network user type switching-back protection. With the use of these backup protection mechanisms, a network is endowed with high reliability and stability, the flexibility of deployment is improved. Besides, these backup protection mechanisms are transparent to a terminal user.

### Industrial Applicability

By detecting occurrence of a service exception, which is included in service failures of a CGN device, on a service unit, determining a deployment scenario of the CGN device and adopting, according to the determined deployment scenario, a backup mode corresponding to the determined deployment scenario to implement backup protection, the method provided herein addresses the problem that the relatively simplex use of either hot backup or cold backup in related art is inapplicable to more application scenarios and consequentially improves the reliability and the stability of a network.

## Claims

1. A backup protection method for Carrier Grade network address Translation, CGN, comprising:
detecting (S102) occurrence of a service exception, which is included in service failures of a CGN device, on a service unit;
determining (S104) a deployment scenario of the CGN device; and
adopting (S106), according to the determined deployment scenario, a backup mode corresponding to the determined deployment scenario to implement backup protection;
wherein the deployment scenario comprises at least one of: one CGN device and two CGN devices;
wherein adopting (S106), according to the determined deployment scenario, the backup mode corresponding to the determined deployment scenario to implement backup protection comprises: in a case where the deployment scenario is one CGN device deployed, acquiring a public network address by refreshing an address of a terminal user and performing protection switching of a private network user to a public network user under a condition that a service exception occurs in the CGN device; and switching the public network user back to the private network user under a condition that a service of the CGN device is restored;
wherein adopting (S106), according to the determined deployment scenario, the backup mode corresponding to the determined deployment scenario to implement backup protection comprises: in a case where the deployment scenario is two CGN devices, private network user tunnel backup switching and switching-back may include: under a condition that a service exception occurs in the CGN device, marking a tunnel flag as activated and encapsulating a tunnel to enable a private network user to process a service at a remote centralized CGN device; and under a condition that a service of the CGN device is restored, marking the tunnel flag as deactivated and accessing a public network address after routing and forwarding at an intermediate device; in a case where the deployment scenario is two CGN devices, private network user label backup switching and switching-back may include: under a condition that a service exception occurs in the CGN device, marking a label flag as activated and encapsulating a label to enable a private network user to process a service at a remote centralized CGN device; and under a condition that a service of the CGN device is restored, marking the label flag as deactivated and accessing a public network address after routing and forwarding at an intermediate device; and in a case where the deployment scenario is two CGN devices, private network user type tunnel backup switching and switching-back may include: under a condition that a service exception occurs in the CGN device, when a service of a service unit is interrupted, causing a user to log out and then conduct Virtual Private Dial-up Network, VPDN, dialing again to obtain a private or public network address, enabling a private network user to process a service at a remote Layer 2 Tunneling Protocol, L2TP, Network Server, LNS, device and directly performing routing and forwarding for a public network user at a remote LNS device; and under a condition that a service of the CGN device is restored, accessing a public network after routing and forwarding at an intermediate device.

2. The method as claimed in claim 1, wherein adopting (S106) the backup mode corresponding to the determined deployment scenario to implement backup protection comprises at least one of:
carrying out at least one of the following switching operations if a service exception of the CGN device is detected: protection switching of a private network user to a public network user, private network user remote backup protection, private network user tunnel backup protection, private network user label backup protection, and private network user type switching backup protection; and
carrying out at least one of the following switching-back operations if service restoration of the CGN device is detected: switching of a public network user back to a private network user, private network user remote switching-back protection, private network user tunnel switching-back protection, private network user label switching-back protection, and private network user type switching-back protection.

3. The method as claimed in claim 1, wherein the interruption of the service refers to occurrence of a failure in the service unit, and comprises: exhaustion of a public network address pool, manual restart of the service unit by a manager, deactivation of a service switch by the manager.

4. The method as claimed in claim 1, wherein marking the tunnel flag as activated or deactivated is processed in one of the following ways: the tunnel flag is directly set in a tunnel module after matching of a user source address; or the tunnel flag is realized by setting priorities of tunnel routings; or the tunnel flag is realized by setting a mutual exclusion marker for CGN and the tunnel.

5. The method as claimed in claim 1, wherein marking the label flag as activated or deactivated is processed in one of the following ways: the label flag is directly set in a label module after matching of a user source address; or the label flag is realized by setting priorities of label routings; or the label flag is realized by setting a mutual exclusion marker for CGN and the label.

6. A backup protection device for Carrier Grade network address Translation, CGN, comprising:
a detection module (22) arranged to detect occurrence of a service exception, which is included in service failures of a CGN device, on a service unit;
a determination module (24) arranged to determine a deployment scenario of the CGN device; and
a protection module (26) arranged to adopt, according to the determined deployment scenario, a backup mode corresponding to the determined deployment scenario to implement backup protection;
wherein the deployment scenario may include at least one of: one CGN device and two CGN devices;
wherein in a case where the deployment scenario is one CGN device deployed, the protection module (26) is also arranged to:
acquire a public network address by refreshing an address of a terminal user and perform protection switching of a private network user to a public network user under a condition that a service exception occurs in the CGN device; and switch the public network user back to the private network user under a condition that a service of the CGN device is restored;
wherein the protection module (26) is also arranged to: in a case where the deployment scenario is two CGN devices, carry out a private network user tunnel backup switching and switching-back processing which includes: under a condition that a service exception occurs in the CGN device, marking a tunnel flag as activated and encapsulating a tunnel to enable a private network user to process a service at a remote centralized CGN device; and under a condition that a service of the CGN device is restored, marking the tunnel flag as deactivated and accessing a public network address after routing and forwarding at an intermediate device; in a case where the deployment scenario is two CGN devices, carry out a private network user label backup switching and switching-back processing which may include: under a condition that a service exception occurs in the CGN device, marking a label flag as activated and encapsulating a label to enable a private network user to process a service at a remote centralized CGN device; and under a condition that a service of the CGN device is restored, marking the label flag as deactivated and accessing a public network address after routing and forwarding at an intermediate device; and in a case where the deployment scenario is two CGN devices, carry out a private network user type backup switching and switching-back processing which may include: under a condition that a service exception occurs in the CGN device, when a service of a service unit is interrupted, causing a Point to Point Protocol over Ethernet, PPPoE, user to log out and then conduct Virtual Private Dial-up Network, VPDN, dialing again to obtain a private or public network address, enabling a private network user to process a service at a remote LNS device and directly performing routing and forwarding for a public network user at a remote Layer 2 Tunneling Protocol, L2TP, Network Server, LNS, device; and under a condition that a service of the CGN device is restored, accessing a public network after routing and forwarding at an intermediate device.

7. The device as claimed in claim 6, wherein adopting, according to the determined deployment scenario, the backup mode corresponding to the determined deployment scenario to implement backup protection comprises at least one of:
carrying out at least one of the following switching operations if a service exception of the CGN device is detected: protection switching of a private network user to a public network user, private network user remote backup protection, private network user tunnel backup protection, private network user label backup protection, and private network user type switching backup protection; and
carrying out at least one of the following switching-back operations if service restoration of the CGN device is detected: switching of a public network user back to a private network user, private network user remote switching-back protection, private network user tunnel switching-back protection, private network user label switching-back protection, and private network user type switching-back protection.

8. The device as claimed in claim 6, wherein the interruption of the service refers to occurrence of a failure in the service unit, and comprises: exhaustion of a public network address pool, manual restart of the service unit by a manager, deactivation of a service switch by the manager.

9. The device as claimed in claim 6, wherein
marking the tunnel flag as activated or deactivated is processed in one of the following ways: the tunnel flag is directly set in a tunnel module after matching of a user source address; or the tunnel flag is realized by setting priorities of tunnel routings; or the tunnel flag is realized by setting a mutual exclusion marker for CGN and the tunnel; or,
marking the label flag as activated or deactivated is processed in one of the following ways: the label flag is directly set in a label module after matching of a user source address; or the label flag is realized by setting priorities of label routings; or the label flag is realized by setting a mutual exclusion marker for CGN and the label.

## Patentansprüche

1. Backup-Schutzverfahren für ein Carrier-grade NAT (Netzwerkadressübersetzung), CGN, umfassend:
Detektieren (S102) des Auftretens einer Dienstausnahme, die in Dienstausfällen einer CGN-Vorrichtung beinhaltet ist, in einer Diensteinheit;
Bestimmen (S104) eines Einsatzszenarios der CGN-Vorrichtung; und
Annehmen (S106), entsprechend dem bestimmten Einsatzszenario, eines Backup-Modus entsprechend dem bestimmten Einsatzszenario zum Umsetzen eines Backup-Schutzes;
wobei das Einsatzszenario mindestens eines umfasst von: einer CGN-Vorrichtung und zwei CGN-Vorrichtungen;
wobei das Annehmen (S106), entsprechend dem bestimmten Einsatzszenario, des Backup-Modus entsprechend dem bestimmten Einsatzszenario zum Umsetzen eines Backup-Schutzes umfasst: in einem Fall, in dem das Einsatzszenario eine eingesetzte CGN-Vorrichtung ist, Beschaffen einer öffentlichen Netzwerkadresse durch Aktualisieren einer Adresse eines Endgerätenutzers und Durchführen einer Schutzumschaltung eines privaten Netzwerknutzers auf einen öffentlichen Netzwerknutzer unter einer Bedingung, dass eine Dienstausnahme in der CGN-Vorrichtung auftritt; und Umschalten des öffentlichen Netzwerknutzers zurück auf den privaten Netzwerknutzer unter einer Bedingung, dass ein Dienst der CGN-Vorrichtung wiederhergestellt ist;
wobei das das Annehmen (S106), entsprechend dem bestimmten Einsatzszenario, des Backup-Modus entsprechend dem bestimmten Einsatzszenario zum Umsetzen eines Backup-Schutzes umfasst: in einem Fall, in dem das Einsatzszenario zwei eingesetzte CGN-Vorrichtungen sind, können die Tunnel-Backup-Umschaltung eines privaten Netzwerknutzers und das Zurückschalten Folgendes beinhalten: unter einer Bedingung, dass eine Dienstausnahme in der CGN-Vorrichtung auftritt, Markieren einer Tunnel-Flagge als aktiviert, und Einkapseln eines Tunnels, um es einem privaten Netzwerknutzer zu ermöglichen, einen Dienst an einer entfernten zentralisierten CGN-Vorrichtung zu bearbeiten; und unter einer Bedingung, dass ein Dienst der CGN-Vorrichtung wiederhergestellt ist, Markieren einer Tunnel-Flagge als deaktiviert, und Zugreifen auf eine öffentliche Netzwerkadresse nach dem Routen und Weiterleiten an einer Zwischenvorrichtung; in einem Fall, in dem das Einsatzszenario zwei eingesetzte CGN-Vorrichtungen sind, können ein Umschalten eines Kennungsbackups eines privaten Netzwerknutzers und Zurückschalten Folgendes beinhalten: unter einer Bedingung, dass eine Dienstausnahme in der CGN-Vorrichtung auftritt, Markieren einer Kennungsflagge als aktiviert, und Einkapseln einer Kennung, um es einem privaten Netzwerknutzer zu ermöglichen, einen Dienst an einer entfernten zentralisierten CGN-Vorrichtung zu bearbeiten; und unter einer Bedingung, dass ein Dienst der CGN-Vorrichtung wiederhergestellt ist, Markieren der Kennungsflagge als deaktiviert und Zugreifen auf eine öffentliche Netzwerkadresse nach dem Routen und Weiterleiten an einer Zwischenvorrichtung; und in einem Fall, in dem das Einsatzszenario zwei eingesetzte CGN-Vorrichtungen sind, können das Umschalten eines Tunnelbackups eines privaten Netzwerknutzertyps und das Zurückschalten Folgendes beinhalten: unter einer Bedingung, dass eine Dienstausnahme in der CGN-Vorrichtung auftritt, wenn ein Dienst einer Diensteinheit unterbrochen ist, bewirken, dass sich ein Nutzer abmeldet, und dann ein virtuelles privates Einwahlnetzwerk, VPDN, betreibt, sich erneut einwählt, um eine private oder öffentliche Netzwerkadresse zu erhalten, die es einem privaten Netzwerknutzer ermöglicht, einen Dienst in einer entfernten Layer 2 Tunneling Protocol-, L2TP, Netzwerkserver-, LNS, Vorrichtung zu bearbeiten, und direkt ein Routen und Weiterleiten eines öffentlichen Netzwerknutzers an einer entfernten LNS-Vorrichtung durchzuführen; und unter einer Bedingung, dass ein Dienst der CGN-Vorrichtung wiederhergestellt ist, Zugreifen auf ein öffentliches Netzwerk nach dem Routen und Weiterleiten an einer Zwischenvorrichtung.

2. Verfahren nach Anspruch 1, wobei das Annehmen (S106) des Backup-Modus entsprechend dem bestimmten Einsatzszenario zum Umsetzen eines Backup-Schutzes mindestens eines umfasst von:
Ausführen mindestens einer der folgenden Umschaltvorgänge, falls eine Dienstausnahme der CGN-Vorrichtung detektiert wird: Schutzumschaltung eines privaten Netzwerknutzers auf einen öffentlichen Netzwerknutzer, entfernter Backup-Schutz eines privaten Netzwerknutzers, Tunnel-Backup-Schutz eines privaten Netzwerknutzers, Kennungsbackup-Schutz eines privaten Netzwerknutzers, Umschaltbackup-Schutz eines privaten Netzwerknutzertyps; und
Ausführen mindestens eines der folgenden Rückschaltvorgänge, falls eine Dienstwiederherstellung der CGN-Vorrichtung detektiert wird; Umschalten eines öffentlichen Netzwerknutzers zurück auf einen privaten Netzwerknutzer, entfernter Rückschaltschutz eines privaten Netzwerknutzers, Tunnelrückschaltschutz eines peivaten Netzwerknutzers, Kennungsrückschaltschutz eines privaten Netzwerknutzers, und Rückschaltschutz eines privaten Netzwerknutzertyps.

3. Verfahren nach Anspruch 1, wobei sich die Unterbrechung des Dienstes auf das Auftreten eines Ausfalls in der Diensteinheit bezieht, und Folgendes umfasst: Ausschöpfung eines öffentlichen Netzwerkadressenpools, einen manuellen Neustart der Diensteinheit durch einen Manager, Deaktivieren eines Dienstschalters durch den Manager.

4. Verfahren nach Anspruch 1, wobei das Markieren der Tunnelflagge als aktiviert oder deaktiviert, auf eine der folgenden Arten bearbeitet wird: die Tunnelflagge wird direkt in einem Tunnelmodul nach dem Abgleichen einer Nutzerquelladresse gesetzt; oder die Tunnelflagge wird durch Setzen von Prioritäten von Tunnel-Routings realisiert; oder die Tunnelflagge wird durch Setzen eines gegenseitigen Ausschlussmarkers für CGN und den Tunnel realisiert.

5. Verfahren nach Anspruch 1, wobei das Markieren der Kennungsflagge als aktiviert oder deaktiviert , auf eine der folgenden Arten bearbeitet wird: die Kennungsflagge wird direkt in einem Kennungsmodul nach dem Abgleichen einer Nutzerquelladresse gesetzt; oder die Kenungsflagge wird durch Setzen von Prioritäten von Kennungs-Routings realisiert; oder die Kennungsflagge wird durch Setzen eines gegenseitigen Ausschlussmarkers für CGN und die Kennung realisiert.

6. Backup-Schutzvorrichtung für eine Carrier-grade NAT (Netzwerkadressübersetzung), CGN, umfassend:
ein Detektionsmodul (22), das angeordnet ist, um das des Auftreten einer Dienstausnahme, die in Dienstausfällen einer CGN-Vorrichtung beinhaltet ist, in einer Diensteinheit zu detektieren;
ein Bestimmungsmodul (24), das angeordnet ist, ein Einsatzszenario der CGN-Vorrichtung zu bestimmen; und
ein Schutzmodul (26), das angeordnet ist, um entsprechend dem bestimmten Einsatzszenario, einen Backup-Modus entsprechend dem bestimmten Einsatzszenario zum Umsetzen eines Backup-Schutzes anzunehmen;
wobei das Einsatzszenario mindestens eines beinhalten kann von: einer CGN-Vorrichtung und zwei CGN-Vorrichtungen;
wobei in einem Fall, in dem das Einsatzszenario eine eingesetzte CGN-Vorrichtung ist, das Schutzmodul (26) auch angeordnet ist, um:
eine öffentliche Netzwerkadresse durch Aktualisieren einer Adresse eines Endgerätenutzers zu beschaffen, und eine Schutzumschaltung eines privaten Netzwerknutzers auf einen öffentlichen Netzwerknutzer unter einer Bedingung durchzuführen, dass eine Dienstausnahme in der CGN-Vorrichtung auftritt; und den öffentlichen Netzwerknutzer unter einer Bedingung zurück auf den privaten Netzwerknutzer zu schalten, dass ein Dienst der CGN-Vorrichtung wiederhergestellt ist;
wobei das Schutzmodul (26) auch angeordnet ist, um: in einem Fall, in dem das Einsatzszenario zwei eingesetzte CGN-Vorrichtungen sind, eine Tunnel-Backup-Umschaltung eines privaten Netzwerknutzers und eine Zurückschaltbearbeitung, Folgendes beinhaltend, auszuführen: unter einer Bedingung, dass eine Dienstausnahme in der CGN-Vorrichtung auftritt, Markieren einer Tunnel-Flagge als aktiviert, und Einkapseln eines Tunnels, um es einem privaten Netzwerknutzer zu ermöglichen, einen Dienst an einer entfernten zentralisierten CGN-Vorrichtung zu bearbeiten; und unter einer Bedingung, dass ein Dienst der CGN-Vorrichtung wiederhergestellt ist, Markieren der Tunnel-Flagge als deaktiviert, und Zugreifen auf eine öffentliche Netzwerkadresse nach dem Routen und Weiterleiten an einer Zwischenvorrichtung; in einem Fall, in dem das Einsatzszenario zwei eingesetzte CGN-Vorrichtungen sind, können eine Kennungsbackup-Umschaltung eines privaten Netzwerknutzers und ein Zurückschalten Folgendes beinhalten: unter einer Bedingung, dass eine Dienstausnahme in der CGN-Vorrichtung auftritt, Markieren einer Kennungsflagge als aktiviert, und Einkapseln einer Kennung, um es einem privaten Netzwerknutzer zu ermöglichen, einen Dienst an einer entfernten zentralisierten CGN-Vorrichtung zu bearbeiten; und unter einer Bedingung, dass ein Dienst der CGN-Vorrichtung wiederhergestellt ist, Markieren der Kennungsflagge als deaktiviert und Zugreifen auf eine öffentliche Netzwerkadresse nach dem Routen und Weiterleiten an einer Zwischenvorrichtung; und in einem Fall, in dem das Einsatzszenario zwei eingesetzte CGN-Vorrichtungen sind, Ausführen einer Backup-Umschaltung eines privaten Netzwerknutzertyps und einer Zurückschaltungsbearbeitung, die Folgendes beinhalten können: unter einer Bedingung, dass eine Dienstausnahme in der CGN-Vorrichtung auftritt, wenn ein Dienst einer Diensteinheit unterbrochen ist, bewirken, dass sich ein Point-to-Poin Protocol über eine Ethernetverbindung-, PPPoE-Nutzer abmeldet, und dann wieder ein virtuelles privates Einwahlnetzwerk, VPDN, betreibt, sich erneut einwählt, um eine private oder öffentliche Netzwerkadresse zu erhalten, die es einem privaten Netzwerknutzer ermöglicht, einen Dienst in einer entfernten LNS-Vorrichtung zu bearbeiten, und direkt ein Routen und Weiterleiten eines öffentlichen Netzwerknutzers an einer Layer 2 Tunneling Protocol-, L2TP, Netzwerkserver-, LNS, Vorrichtung bearbeitet; und unter einer Bedingung, dass ein Dienst der CGN-Vorrichtung wiederhergestellt ist, Zugreifen auf ein öffentliches Netzwerk nach dem Routen und Weiterleiten an einer Zwischenvorrichtung.

7. Vorrichtung nach Anspruch 6, wobei das Annehmen, entsprechend dem bestimmten Einsatzszenario, des Backup-Modus entsprechend dem bestimmten Einsatzszenario zum Umsetzen eines Backup-Schutzes mindestens eines umfasst von:
Ausführen mindestens einer der folgenden Umschaltvorgänge, falls eine Dienstausnahme der CGN-Vorrichtung detektiert wird: Schutzumschaltung eines privaten Netzwerknutzers auf einen öffentlichen Netzwerknutzer, entfernter Backup-Schutz eines privaten Netzwerknutzers, Tunnel-Backup-Schutz eines privaten Netzwerknutzers, Kennungsbackup-Schutz eines privaten Netzwerknutzers, Umschaltbackup-Schutz eines privaten Netzwerknutzertyps; und
Ausführen mindestens eines der folgenden Rückschaltvorgänge, falls eine Dienstwiederherstellung der CGN-Vorrichtung detektiert wird: Umschalten eines öffentlichen Netzwerknutzers zurück auf einen privaten Netzwerknutzer, entfernter Rückschaltschutz eines privaten Netzwerknutzers, Tunnelrückschaltschutz eines peivaten Netzwerknutzers, Kennungsrückschaltschutz eines privaten Netzwerknutzers, und Rückschaltschutz eines privaten Netzwerknutzertyps.

8. Vorrichtung nach Anspruch 6, wobei sich die Unterbrechung des Dienstes auf das Auftreten eines Ausfalls in der Diensteinheit bezieht, und Folgendes umfasst: Ausschöpfung eines öffentlichen Netzwerkadressenpools, einen manuellen Neustart der Diensteinheit durch einen Manager, Deaktivieren eines Dienstschalters durch den Manager.

9. Vorrichtung nach Anspruch 6, wobei
das Markieren der Tunnelflagge als aktiviert oder deaktiviert, auf eine der folgenden Arten bearbeitet wird: die Tunnelflagge wird direkt in einem Tunnelmodul nach dem Abgleichen einer Nutzerquelladresse gesetzt; oder die Tunnelflagge wird durch Setzen von Prioritäten von Tunnel-Routings realisiert; oder die Tunnelflagge wird durch Setzen eines gegenseitigen Ausschlussmarkers für CGN und Tunnel realisiert; oder,
das Markieren der Kennungsflagge als aktiviert oder deaktiviert , auf eine der folgenden Arten bearbeitet wird: die Kennungsflagge wird direkt in einem Kennungsmodul nach dem Abgleichen einer Nutzerquelladresse gesetzt; oder die Kenungsflagge wird durch Setzen von Prioritäten von Kennungs-Routings realisiert; oder die Kennungsflagge wird durch Setzen eines gegenseitigen Ausschlussmarkers für CGN und Kennung realisiert.

## Revendications

1. Procédé de protection de sauvegarde pour une traduction d'adresses de réseau de classe transporteur, CGN, comprenant :
la détection (S102) de la survenue d'une exception de service, qui est incluse dans des défaillances de service d'un dispositif CGN, sur une unité de service ;
la détermination (S104) d'un scénario de déploiement du dispositif CGN ; et
l'adoption (S106), conformément au scénario de déploiement déterminé, d'un mode de sauvegarde correspondant au scénario de déploiement déterminé pour mettre en œuvre une protection de sauvegarde ;
dans lequel le scénario de déploiement comprend au moins un parmi : un dispositif CGN et deux dispositifs CGN ;
dans lequel l'adoption (S106), conformément au scénario de déploiement déterminé, du mode de sauvegarde correspondant au scénario de déploiement déterminé pour mettre en œuvre une protection de sauvegarde comprend : dans un cas où le scénario de déploiement est un dispositif CGN déployé, l'acquisition d'une adresse de réseau public en rafraîchissant une adresse d'un terminal utilisateur et la mise en œuvre d'une commutation de protection d'un utilisateur de réseau privé vers un utilisateur de réseau public à condition qu'une exception de service survienne dans le dispositif CGN ; et la commutation inverse de l'utilisateur de réseau public vers l'utilisateur de réseau privé à condition qu'un service du dispositif CGN soit rétabli ;
dans lequel l'adoption (S106), conformément au scénario de déploiement déterminé, du mode de sauvegarde correspondant au scénario de déploiement déterminé pour mettre en œuvre une protection de sauvegarde comprend : dans un cas où le scénario de déploiement est deux dispositifs CGN, une commutation et une commutation inverse de sauvegarde de tunnel d'utilisateur de réseau privé peuvent inclure : à condition qu'une exception de service survienne dans le dispositif CGN, le marquage d'un drapeau de tunnel comme activé et l'encapsulation d'un tunnel pour permettre à un utilisateur de réseau privé de traiter un service au niveau d'un dispositif CGN centralisé distant ; et à condition qu'un service du dispositif CGN soit rétabli, le marquage du drapeau de tunnel comme désactivé et l'accès à une adresse de réseau public après un routage et un réacheminement au niveau d'un dispositif intermédiaire ; dans un cas où le scénario de déploiement est deux dispositifs CGN, une commutation et une commutation inverse de sauvegarde d'étiquette d'utilisateur de réseau privé peuvent inclure : à condition qu'une exception de service survienne dans le dispositif CGN, le marquage d'un drapeau d'étiquette comme activé et l'encapsulation d'une étiquette pour permettre à un utilisateur de réseau privé de traiter un service au niveau d'un dispositif CGN centralisé distant ; et à condition qu'un service du dispositif CGN soit rétabli, le marquage du drapeau d'étiquette comme désactivé et l'accès à une adresse de réseau public après un routage et un réacheminement au niveau d'un dispositif intermédiaire ; et dans un cas où le scénario de déploiement est deux dispositifs CGN, une commutation et une commutation inverse de sauvegarde de tunnel de type d'utilisateur de réseau privé peuvent inclure : à condition qu'une exception de service survienne dans le dispositif CGN, lorsqu'un service d'une unité de service est interrompu, le fait d'amener un utilisateur à fermer la session puis à exécuter une composition de réseau privé virtuel à accès commuté, VPDN, à nouveau pour obtenir une adresse de réseau privé ou public, la permission pour un utilisateur de réseau privé de traiter un service au niveau d'un dispositif de serveur de réseau de protocole de tunneling de niveau 2, L2TP, LNS, distant et la mise en œuvre directement d'un routage et d'un réacheminement pour un utilisateur de réseau public au niveau d'un dispositif LNS distant ; et à condition qu'un service du dispositif CGN soit rétabli, l'accès à un réseau public après un routage et un réacheminement au niveau d'un dispositif intermédiaire.

2. Procédé selon la revendication 1, dans lequel l'adoption (S106) du mode de sauvegarde correspondant au scénario de déploiement déterminé pour mettre en œuvre une protection de sauvegarde comprend au moins un parmi :
l'accomplissement d'au moins une des opérations de commutation suivantes si une exception de service du dispositif CGN est détectée : une commutation de protection d'un utilisateur de réseau privé vers un utilisateur de réseau public, une protection de sauvegarde distante d'utilisateur de réseau privé, une protection de sauvegarde de tunnel d'utilisateur de réseau privé, une protection de sauvegarde d'étiquette d'utilisateur de réseau privé, et une protection de sauvegarde de commutation de type d'utilisateur de réseau privé ; et
l'accomplissement d'au moins une des opérations de commutation inverse suivantes si un rétablissement de service du dispositif CGN est détecté : la commutation inverse d'un utilisateur de réseau public vers un utilisateur de réseau privé, une protection de commutation inverse distante d'utilisateur de réseau privé, une protection de commutation inverse de tunnel d'utilisateur de réseau privé, une protection de commutation inverse d'étiquette d'utilisateur de réseau privé, et une protection de commutation inverse de type d'utilisateur de réseau privé.

3. Procédé selon la revendication 1, dans lequel l'interruption du service se rapporte à la survenue d'une défaillance dans l'unité de service, et comprend : un épuisement d'un groupe d'adresses de réseau public, un redémarrage manuel de l'unité de service par un gestionnaire, une désactivation d'un commutateur de service par le gestionnaire.

4. Procédé selon la revendication 1, dans lequel le marquage du drapeau de tunnel comme activé ou désactivé est traité de l'une des façons suivantes : le drapeau de tunnel est défini directement dans un module de tunnel après une association d'une adresse source d'utilisateur ; ou le drapeau de tunnel est réalisé en définissant des priorités de routages de tunnel ; ou le drapeau de tunnel est réalisé en définissant un marqueur d'exclusion mutuelle pour un CGN et le tunnel.

5. Procédé selon la revendication 1, dans lequel le marquage du drapeau d'étiquette comme activé ou désactivé est traité de l'une des façons suivantes : le drapeau d'étiquette est défini directement dans un module d'étiquette après une association d'une adresse source d'utilisateur ; ou le drapeau d'étiquette est réalisé en définissant des priorités de routages d'étiquette ; ou le drapeau d'étiquette est réalisé en définissant un marqueur d'exclusion mutuelle pour un CGN et l'étiquette.

6. Dispositif de protection de sauvegarde pour une traduction d'adresses de réseau de classe transporteur, CGN, comprenant :
un module de détection (22) agencé pour détecter la survenue d'une exception de service, qui est incluse dans des défaillances de service d'un dispositif CGN, sur une unité de service ;
un module de détermination (24) agencé pour déterminer un scénario de déploiement du dispositif CGN ; et
un module de protection (26) agencé pour adopter, conformément au scénario de déploiement déterminé, un mode de sauvegarde correspondant au scénario de déploiement déterminé pour mettre en œuvre une protection de sauvegarde ;
dans lequel le scénario de déploiement peut inclure au moins un parmi : un dispositif CGN et deux dispositifs CGN ;
dans lequel dans un cas où le scénario de déploiement est un dispositif CGN déployé, le module de protection (26) est également agencé pour :
acquérir une adresse de réseau public en rafraîchissant une adresse d'un terminal utilisateur et mettre en œuvre une commutation de protection d'un utilisateur de réseau privé vers un utilisateur de réseau public à condition qu'une exception de service survienne dans le dispositif CGN ; et commuter à l'inverse l'utilisateur de réseau public vers l'utilisateur de réseau privé à condition qu'un service du dispositif CGN soit rétabli ;
dans lequel le module de protection (26) est également agencé pour : dans un cas où le scénario de déploiement est deux dispositifs CGN, l'accomplissement d'un traitement de commutation et de commutation inverse de sauvegarde de tunnel d'utilisateur de réseau privé qui inclut : à condition qu'une exception de service survienne dans le dispositif CGN, le marquage d'un drapeau de tunnel comme activé et l'encapsulation d'un tunnel pour permettre à un utilisateur de réseau privé de traiter un service au niveau d'un dispositif CGN centralisé distant ; et à condition qu'un service du dispositif CGN soit rétabli, le marquage du drapeau de tunnel comme désactivé et l'accès à une adresse de réseau public après un routage et un réacheminement au niveau d'un dispositif intermédiaire ; dans un cas où le scénario de déploiement est deux dispositifs CGN, l'accomplissement d'un traitement de commutation et de commutation inverse de sauvegarde d'étiquette d'utilisateur de réseau privé qui peut inclure : à condition qu'une exception de service survienne dans le dispositif CGN, le marquage d'un drapeau d'étiquette comme activé et l'encapsulation d'une étiquette pour permettre à un utilisateur de réseau privé de traiter un service au niveau d'un dispositif CGN centralisé distant ; et à condition qu'un service du dispositif CGN soit rétabli, le marquage du drapeau d'étiquette comme désactivé et l'accès à une adresse de réseau public après un routage et un réacheminement au niveau d'un dispositif intermédiaire ; et dans un cas où le scénario de déploiement est deux dispositifs CGN, l'accomplissement d'un traitement de commutation et de commutation inverse de sauvegarde de type d'utilisateur de réseau privé qui peut inclure : à condition qu'une exception de service survienne dans le dispositif CGN, lorsqu'un service d'une unité de service est interrompu, le fait d'amener un utilisateur du protocole point à point sur Ethernet, PPPoE, à fermer la session puis à exécuter une composition de réseau privé virtuel à accès commuté, VPDN, à nouveau pour obtenir une adresse de réseau privé ou public, la permission pour un utilisateur de réseau privé de traiter un service au niveau d'un dispositif LNS distant et la mise en œuvre directement d'un routage et d'un réacheminement pour un utilisateur de réseau public au niveau d'un dispositif de serveur de réseau de protocole de tunneling de niveau 2, L2TP, LNS, distant ; et à condition qu'un service du dispositif CGN soit rétabli, l'accès à un réseau public après un routage et un réacheminement au niveau d'un dispositif intermédiaire.

7. Dispositif selon la revendication 6, dans lequel l'adoption, conformément au scénario de déploiement déterminé, du mode de sauvegarde correspondant au scénario de déploiement déterminé pour mettre en œuvre une protection de sauvegarde comprend au moins un parmi :
l'accomplissement d'au moins une des opérations de commutation suivantes si une exception de service du dispositif CGN est détectée : une commutation de protection d'un utilisateur de réseau privé vers un utilisateur de réseau public, une protection de sauvegarde distante d'utilisateur de réseau privé, une protection de sauvegarde de tunnel d'utilisateur de réseau privé, une protection de sauvegarde d'étiquette d'utilisateur de réseau privé, et une protection de sauvegarde de commutation de type d'utilisateur de réseau privé ; et
l'accomplissement d'au moins une des opérations de commutation inverse suivantes si un rétablissement de service du dispositif CGN est détecté : la commutation inverse d'un utilisateur de réseau public vers un utilisateur de réseau privé, une protection de commutation inverse distante d'utilisateur de réseau privé, une protection de commutation inverse de tunnel d'utilisateur de réseau privé, une protection de commutation inverse d'étiquette d'utilisateur de réseau privé, et une protection de commutation inverse de type d'utilisateur de réseau privé.

8. Dispositif selon la revendication 6, dans lequel l'interruption du service se rapporte à la survenue d'une défaillance dans l'unité de service, et comprend : un épuisement d'un groupe d'adresses de réseau public, un redémarrage manuel de l'unité de service par un gestionnaire, une désactivation d'un commutateur de service par le gestionnaire.

9. Dispositif selon la revendication 6, dans lequel
le marquage du drapeau de tunnel comme activé ou désactivé est traité de l'une des façons suivantes : le drapeau de tunnel est défini directement dans un module de tunnel après une association d'une adresse source d'utilisateur ; ou le drapeau de tunnel est réalisé en définissant des priorités de routages de tunnel ; ou le drapeau de tunnel est réalisé en définissant un marqueur d'exclusion mutuelle pour un CGN et le tunnel ; ou
le marquage du drapeau d'étiquette comme activé ou désactivé est traité de l'une des façons suivantes : le drapeau d'étiquette est défini directement dans un module d'étiquette après une association d'une adresse source d'utilisateur ; ou le drapeau d'étiquette est réalisé en définissant des priorités de routages d'étiquette ; ou le drapeau d'étiquette est réalisé en définissant un marqueur d'exclusion mutuelle pour un CGN et l'étiquette.
